# EUROPEAN PATENT APPLICATION

(11) **EP 4 838 978 A1**
(43) Date of publication of application: **11.11.2026**
(21) Application number: 25751542.9
(22) Date of filing: 06.02.2025
(51) Int. Cl.: H04W 72/044, H04W 72/542, H04W 24/08, H04W 24/10

(54) **COMMUNICATION METHOD, COMMUNICATION APPARATUS, AND COMMUNICATION SYSTEM**

(30) Priority: 07.02.2024 CN 202410172159
(71) Applicant: Honor Device Co., Ltd., Shenzhen, Guangdong 518040 (CN)
(72) Inventor: WANG, Chao, Shenzhen, Guangdong 518040 (CN); ZENG, YongBo, Shenzhen, Guangdong 518040 (CN); CHI, Liangang, Shenzhen, Guangdong 518040 (CN)
(74) Representative: Isarpatent
(86) International application number: PCT/CN2025/075886
(87) International publication number: WO 2025/167943

(57) **Abstract**

This application provides a communication method, a communication apparatus, and a communication system. In the method, a terminal device may measure signal quality of a first reference signal on a first carrier; send a first message on a second carrier based on the signal quality of the first reference signal, where the first message includes first indication information, and the first indication information indicates the signal quality of the first reference signal; send a second message, where the second message is used to request carrier switching; receive second indication information, where the second indication information indicates to switch the second carrier to a third carrier, a frequency band of the third carrier is different from a frequency band of the second carrier, and the third carrier is used to send the first message; and receive a third message on the third carrier, where the third message indicates beam switching or update, the third message is sent by a network device when the network device receives the first message N times, and N is a positive integer. In the method, latency and signaling overheads during beam switching/update can be reduced.

## Description

This application claims priority to Chinese Patent Application No. 202410172159.5, filed with the China National Intellectual Property Administration on February 7, 2024 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

Currently, beam reporting and beam switching/update are mainly initiated through a network (net work, NW). The NW configures/requests user equipment (user equipment, UE) to measure some beams, and the UE reports an optimal beam after the beam measurement. The NW indicates the UE to switch to some beams for downlink (down link, DL) receiving and/or uplink (up link, UL) sending. Latency and signaling overheads are high during beam switching/update.

### SUMMARY

This application provides a communication method, a communication apparatus, and a communication system. In the communication method, latency and signaling overheads during beam switching/update can be reduced.

According to a first aspect, this application provides a communication method. The method may be performed by a terminal device or a module (for example, a chip) in the terminal device. The method includes: measuring signal quality of a first reference signal on a first carrier; sending a first message on a second carrier based on the signal quality of the first reference signal, where the first message includes first indication information, and the first indication information indicates the signal quality of the first reference signal; sending a second message, where the second message is used to request carrier switching; receiving second indication information, where the second indication information indicates to switch the second carrier to a third carrier, a frequency band of the third carrier is different from a frequency band of the second carrier, and the third carrier is used to send the first message; and receiving a third message on the third carrier, where the third message indicates beam switching or update, the third message is sent by a network device when the network device receives the first message N times, and N is a positive integer.

It should be understood that current beam switching/update is based on periodic beam reporting (except for extreme cases such as beam failure recovery) in most cases. If the network device and the terminal device are reconnected due to the periodic beam reporting, latency and signaling overhead are high. However, in this embodiment of this application, the terminal device performs determining and reporting (or may be referred to as event trigger reporting at a terminal device side) on the signal quality of the first reference signal, so that the network device may be notified in time in a process in which the signal quality of the first reference signal decreases, helping the network device perform determining and processing (that is, whether to switch or update a beam) in time, so as to resolve a problem in a current protocol that latency and signaling overheads are high during beam switching/update because the network device initiates signal quality detection of a reference signal.

In this embodiment of this application, when signal quality of a frequency band (for example, the first carrier) is not good, another frequency band (for example, the third carrier) may be used to assist in completing reporting of the signal quality of the reference signal by the terminal device and feedback of the network device for the reporting, to properly allocate carrier resources, helping the network device perform determining and processing (that is, switch to the third carrier) in time, so as to ensure signal quality of data transmission between the terminal device and the network device.

It should be understood that the second indication information indicates to switch, from the second carrier to the third carrier, a carrier component carrying the first message. It should be understood that the carrier component carrying the first message may also be referred to as a carrier component on which the first message is sent, or referred to as a carrier component carrying the first indication information (that is, indication information indicating the signal quality of the first reference signal). For example, the second indication information may include an identifier of the third carrier (or referred to as auxiliary carrier information). Optionally, the second indication information may further include an identifier of the first message or an identifier of the second carrier.

For example, the auxiliary carrier information may be at least one of the following: a frequency band, a channel bandwidth, and a sub-carrier spacing.

With reference to the first aspect, in a possible implementation, a frequency band of the first carrier is the same as the frequency band of the second carrier, or the frequency band of the first carrier is different from the frequency band of the second carrier.

Whether a carrier component (carrier component, CC) on which the first reference signal is sent and a carrier component on which the first message is sent are the same is not limited in embodiments of this application. This may improve flexibility of carrier resource allocation.

With reference to the first aspect, in a possible implementation, the third message is sent by the network device when the network device receives the first message N times in a first time window, start time of the first time window is a moment at which the network device receives the first message for the first time or a sum of the moment at which the network device receives the first message for the first time and an offset, and the offset is predefined or is configured by the network device.

In this embodiment of this application, the network device may send the third message to the terminal device when receiving, in the first time window N times, the indication information (for example, the first indication information) indicating the signal quality of the first reference signal. According to the method, beam switching or update may be performed when poor signal quality of the first reference signal frequently occurs in preset duration, to improve transmission quality of data transmission.

Duration of the first time window is not limited in this application. A carrier component for sending the first message N times is not limited in this application, and the carrier component may be the second carrier, the third carrier, or another carrier component.

With reference to the first aspect, in a possible implementation, the method further includes: sending a fourth message on the second carrier before receiving the third message on the third carrier, where the fourth message indicates that the second indication information is received; performing event trigger configuration with the network device through the third carrier after sending the fourth message; and performing event trigger configuration with the network device through the second carrier after receiving the third message.

In this embodiment of this application, the terminal device may send a feedback message (for example, the fourth message) to the network device after receiving the second indication information; and performs event trigger configuration with the network device through the third carrier after sending the feedback message. According to the method, a success rate of event trigger configuration between the terminal device and the network device through the third carrier can be improved.

In this embodiment of this application, the terminal device may perform event trigger configuration with the network device through the second carrier after receiving the third message. It may be understood that performing event trigger configuration on the second carrier may be an initial state. When the signal quality of the first reference signal on the first carrier satisfies a first condition, the signal quality on the second carrier may also deteriorate, or is about to deteriorate/is deteriorating. In this embodiment of this application, the event trigger configuration is switched from the second carrier to the third carrier, so that robustness of the entire process can be improved.

With reference to the first aspect, in a possible implementation, the signal quality of the first reference signal satisfies the first condition.

The first condition includes at least one of the following: The signal quality is lower than a first threshold, a difference between the signal quality and previously detected signal quality is higher than a second threshold, a decrease rate of the signal quality in a second time window exceeds a third threshold, or a difference between a decrease rate of the signal quality in a third time window and a previously detected decrease rate in the third time window is higher than a fourth threshold.

With reference to the first aspect, in a possible implementation, the first threshold, the second threshold, the third threshold, the fourth threshold, the first time window, and the second time window are configured by the network device or are predefined; and
the first threshold, the second threshold, the third threshold, and the fourth threshold are different from a threshold used for discovering a candidate beam, and there is no association between the first threshold, the second threshold, the third threshold, and the fourth threshold.

With reference to the first aspect, in a possible implementation, the first message further includes indication information indicating the first condition.

With reference to the first aspect, in a possible implementation, the signal quality is layer 1-reference signal received power (L1-reference signal received power, L1-RSRP) or a layer 1-signal-to-interference-plus-noise ratio (L1-signal to interference plus noise ratio, L1-SINR).

With reference to the first aspect, in a possible implementation, the signal quality is at least one of the following:
signal quality of a demodulation reference signal (demodulation reference signal, DMRS) associated with a physical downlink shared channel (physical downlink shared channel, PDSCH), signal quality of a reference signal included in a transmission configuration indicator (Transmission Configuration Index, TCI) state (state) associated with the PDSCH, signal quality of a DMRS associated with a physical downlink control channel (physical downlink control channel, PDCCH), signal quality of a reference signal that is quasi-co-located with the DMRS of the PDCCH, and signal quality of a reference signal included in a TCI state associated with a control resource set (coreset).

With reference to the first aspect, in a possible implementation, the first message is one of radio resource control (radio resource control, RRC) signaling, a medium access control control element (MAC control element, MAC CE), and uplink control information (uplink control information, UCI).

With reference to the first aspect, in a possible implementation, the second indication information is an identifier of the third carrier, and the second indication information is carried in downlink control signaling.

According to a second aspect, this application provides a communication method. The method may be performed by a network device or a module (for example, a chip) in the network device. The method may include: sending a first reference signal on a first carrier; receiving a first message on a second carrier, where the first message includes first indication information, the first indication information indicates signal quality of the first reference signal, and the first message is sent by a terminal device based on the signal quality of the first reference signal; receiving a second message, where the second message is used to request carrier switching; sending second indication information, where the second indication information indicates to switch the second carrier to a third carrier, a frequency band of the third carrier is different from a frequency band of the second carrier, and the third carrier is used to send the first message; and sending a third message on the third carrier when receiving the first message N times, where the third message indicates beam switching or update, and N is a positive integer.

With reference to the second aspect, in a possible implementation, a frequency band of the first carrier is the same as the frequency band of the second carrier, or the frequency band of the first carrier is different from the frequency band of the second carrier.

With reference to the second aspect, in a possible implementation, the third message is sent by the network device when the network device receives the first message N times in a first time window, start time of the first time window is a moment at which the network device receives the first message for the first time or a sum of the moment at which the network device receives the first message for the first time and an offset, and the offset is predefined or is configured by the network device.

With reference to the second aspect, in a possible implementation, the method further includes: receiving a fourth message on the second carrier, where the fourth message indicates that the second indication information is received; performing event trigger configuration with the terminal device through the third carrier after receiving the fourth message; and performing event trigger configuration with the terminal device through the second carrier after sending the third message.

With reference to the second aspect, in a possible implementation, the signal quality of the first reference signal satisfies a first condition.

The first condition includes at least one of the following: The signal quality is lower than a first threshold, a difference between the signal quality and previously detected signal quality is higher than a second threshold, a decrease rate of the signal quality in a second time window exceeds a third threshold, or a difference between a decrease rate of the signal quality in a third time window and a previously detected decrease rate in the third time window is higher than a fourth threshold.

With reference to the second aspect, in a possible implementation, the first threshold, the second threshold, the third threshold, the fourth threshold, the first time window, and the second time window are configured by the network device or are predefined; and
the first threshold, the second threshold, the third threshold, and the fourth threshold are different from a threshold used for discovering a candidate beam, and there is no association between the first threshold, the second threshold, the third threshold, and the fourth threshold.

With reference to the second aspect, in a possible implementation, the first message further includes indication information indicating the first condition.

With reference to the second aspect, in a possible implementation, the signal quality is L1-RSRP or an L1-SINR.

With reference to the second aspect, in a possible implementation, the signal quality is at least one of the following:
signal quality of a DMRS associated with a PDSCH, signal quality of a reference signal included in a TCI state associated with the PDSCH, signal quality of a DMRS associated with a PDCCH, signal quality of a reference signal that is quasi-co-located with the DMRS of the PDCCH, and signal quality of a reference signal included in a TCI state associated with a coreset.

With reference to the second aspect, in a possible implementation, the first message is one of RRC signaling, a MAC CE, and UCI.

With reference to the second aspect, in a possible implementation, the second indication information is an identifier of the third carrier, and the second indication information is carried in downlink control signaling.

According to a third aspect, this application provides a communication apparatus. The communication apparatus may be a terminal device or a chip/circuit in the terminal device. The communication apparatus is configured to perform the method according to any one of the first aspect or the possible implementations of the first aspect. The communication apparatus includes a unit that performs the method according to any one of the first aspect or the possible implementations of the first aspect.

According to a fourth aspect, this application provides a communication apparatus. The communication apparatus may be a network device or a chip/circuit in the network device. The communication apparatus is configured to perform the method according to any one of the second aspect or the possible implementations of the second aspect. The second communication apparatus includes a unit that performs the method according to any one of the second aspect or the possible implementations of the second aspect.

In the third aspect or the fourth aspect, the communication apparatus may include a processing unit and a transceiver unit. For specific descriptions of the processing unit and the transceiver unit, also refer to the apparatus embodiments shown below. For beneficial effects of the third aspect to the fourth aspect, refer to the related descriptions of the first aspect to the second aspect. Details are not described herein again.

According to a fifth aspect, this application provides a communication apparatus. The communication apparatus may include a processor and an interface circuit, and the processor is connected to the interface circuit. The interface circuit is configured to exchange (or receive and send or input and output) information or data, and the processor is configured to run program instructions, so that the communication apparatus performs the method described in any one of the first aspect, the second aspect, the possible implementations of the first aspect, or the possible implementations of the second aspect. The interface circuit may be a communication interface or a transceiver. The transceiver may be a radio frequency module in the communication apparatus, or a combination of a radio frequency module and an antenna, or an input/output interface of a chip or a circuit.

According to a sixth aspect, this application provides a readable storage medium. The readable storage medium stores computer instructions. When the computer instructions are run on a computer, the computer is caused to perform the method described in any one of the first aspect, the second aspect, the possible implementations of the first aspect, or the possible implementations of the second aspect.

According to a seventh aspect, this application provides a program product including program instructions. When the program product runs, the method described in any one of the first aspect, the second aspect, the possible implementations of the first aspect, or the possible implementations of the second aspect is caused to be performed.

According to an eighth aspect, this application provides an apparatus. The apparatus may be implemented in a form of a chip, or may be implemented in a form of a device. The apparatus includes a processor. The processor is configured to read and execute a program stored in a memory, to perform an information exchange method provided in one or more of the first aspect or the second aspect, or any one of the possible implementations of any one of the foregoing aspects. Optionally, the apparatus further includes the memory, and the memory is connected to the processor through a circuit. Further, optionally, the apparatus further includes a communication interface, and the processor is connected to the communication interface. The communication interface is configured to receive to-be-processed information, and the processor obtains the information from the communication interface, processes the information, and outputs a processing result through the communication interface. The communication interface may be an input/output interface.

In a possible implementation, the processor and the memory may be physically independent units, or the memory may be integrated with the processor.

According to a ninth aspect, this application provides a communication system, and the communication system includes a network device and a terminal device. The network device is configured to perform the method described in any one of the first aspect or the possible implementations of the first aspect, and the network device is configured to perform the method described in any one of the second aspect or the possible implementations of the second aspect.

For technical effects achieved in the foregoing aspects, refer to each other or refer to beneficial effects in the method embodiments shown below. Details are not described herein again.

### BRIEF DESCRIPTION OF DRAWINGS

FIG. 1 is a diagram of a network architecture of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a diagram of a structure of a communication apparatus according to an embodiment of this application;
FIG. 5 is a diagram of another structure of a communication apparatus according to an embodiment of this application; and
FIG. 6 is a diagram of still another structure of a communication apparatus according to an embodiment of this application.

### DESCRIPTION OF EMBODIMENTS

The following clearly and completely describes technical solutions in embodiments of this application with reference to the accompanying drawings in embodiments of this application. In descriptions of embodiments of this application, "/" indicates "or" unless otherwise specified. For example, A/B may represent A or B. In the specification, "and/or" describes only an association relationship between associated objects, and represents that three relationships may exist. For example, A and/or B may represent the following three cases: Only A exists, both A and B exist, and only B exists. In addition, in the descriptions of embodiments of this application, "a plurality of" indicates two or more.

It should be understood that, the terms "first", "second", and the like in the descriptions, claims, and accompanying drawings of this application are used to distinguish between different objects, and are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" in this application means that specific features, structures, or characteristics described with reference to this embodiment may be included in at least one embodiment of this application. The phrase shown in various locations in the specification may not necessarily refer to a same embodiment, and is not an independent or optional embodiment exclusive from another embodiment. A person skilled in the art explicitly or implicitly understands that embodiments described in this application may be combined with other embodiments.

In a current protocol, only a beam failure recovery (beam failure recovery, BFR) procedure is a beam reporting and switching/update procedure actively initiated by a UE side. The beam failure recovery procedure includes: UE detects that a beam fails (for example, detects that L1-RSRP is lower than a threshold); the UE attempts to discover a new beam or a new beam pair capable of recovering a connection; the UE sends a beam recovery request to a network side; and the network side responds to the beam recovery request.

When the BFR occurs in a secondary cell (secondary cell, SCell), the UE triggers the BFR by using a BFR MAC CE, then the UE selects a beam for the SCell, and includes a signal in the BFR MAC CE to send to a base station. A PDCCH receives an uplink scheduling grant for new transmission of the BFR MAC CE from the UE, and the BFR in the SCell is completed.

However, carrier switching is not included in the foregoing BFR procedure, and beam failure measurement and recovery may not be performed on a same carrier component. This is different from an application scenario and a technical field of this application. Beam reporting and beam switching/update in other scenarios are mainly initiated by the network side, and latency and signaling overheads are high.

In view of this, this application provides a communication method. In this method, a terminal device determines signal quality of a first reference signal and reports the signal quality, so that a network device may be notified in time in a process in which the signal quality of the first reference signal decreases, helping the network device perform determining and processing (that is, whether to switch or update a beam) in time. Because the terminal device is the first to know a change of a beam and a change of an optimal beam, a problem in a current protocol that latency and signaling overheads are high during beam switching/update because the network device initiates signal quality detection of a reference signal can be resolved.

To better understand the communication method, a communication apparatus, and a communication system provided in embodiments of this application, a network architecture used in embodiments of this application is first described below.

For example, the communication system may be a global system for mobile communications (global system for mobile communication, GSM), a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, or a worldwide interoperability for microwave access (worldwide interoperability for microwave access, WiMAX) communication system. The technical solutions in embodiments of this application may further be applied to another communication system, for example, a public land mobile network (public land mobile network, PLMN) system, an advanced long term evolution (LTE advanced, LTE-A) system, a 5th generation (the 5th generation, 5G) mobile communication system, a new radio (new radio, NR) system, a machine to machine (machine to machine, M2M) system, or another future evolved communication system. This is not limited in embodiments of this application. The technical solutions provided in embodiments of this application may further be applied to another communication system. An entity in the communication system may send control information and send (and/or receive) a transport block. Another entity in the communication system may receive control information and receive (and/or send) a transport block.

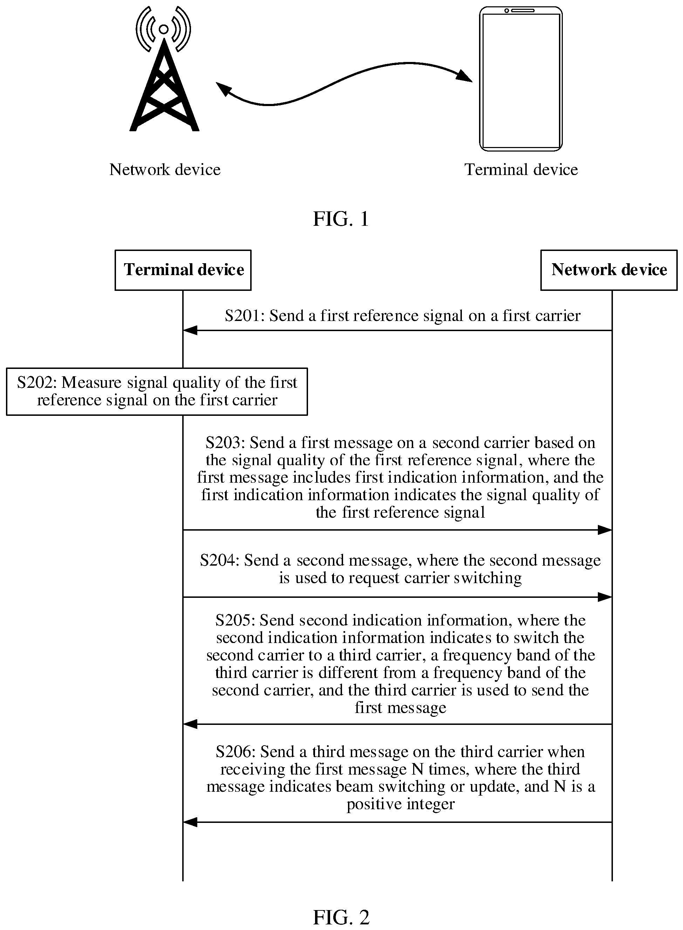

FIG. 1 is a diagram of a network architecture of a communication system according to an embodiment of this application.

As shown in FIG. 1, a network device and a terminal device form a communication system.

In this application, the network device may send a first reference signal to the terminal device on a first carrier. The terminal device may measure signal quality of the first reference signal on the first carrier. The terminal device may send a first message to the network device on a second carrier based on the signal quality of the first reference signal, where the first message includes first indication information, and the first indication information indicates the signal quality of the first reference signal. The terminal device may send a second message to the network device, where the second message is used to request carrier switching. The network device may send second indication information to the terminal device, where the second indication information indicates to switch the second carrier to a third carrier, a frequency band of the third carrier is different from a frequency band of the second carrier, and the third carrier is used to send the first message. The network device may send a third message to the terminal device on the third carrier when the network device receives the first message from the terminal device N times, where the third message indicates beam switching or update, and N is a positive integer.

The terminal device in embodiments of this application is an entity that is at a user side and that is configured to receive or transmit signals, for example, user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

As an example but not a limitation, in this embodiment of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on a human body or integrated into a user's clothing or accessory. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the terminal device in embodiments of this application may alternatively be a terminal in an internet of things (internet of things, IoT) system. IoT is an important part of future information technology development. A main technical feature of the IoT is to connect an object to a network by using a communication technology, to implement an intelligent network for humanmachine interconnection and thing-thing interconnection. In embodiments of this application, an IoT technology can implement massive connections, deep coverage, and terminal power saving by using, for example, a narrow band (narrow band, NB) technology.

In addition, in embodiments of this application, the terminal device may further include a sensor like an intelligent printer, a train detector, or a gas station, and main functions include collecting data (for some terminal devices), receiving control information and downlink data of the network device, sending an electromagnetic wave, and transmitting uplink data to the network device.

The network device in embodiments of this application is an entity configured to transmit or receive signals, and may be a device configured to communicate with the terminal device. The network device may be a base transceiver station (base transceiver station, BTS) in a global system for mobile communications (global system for mobile communications, GSM) or code division multiple access (code division multiple access, CDMA), a NodeB (NodeB, NB) in a wideband code division multiple access (wideband code division multiple access, WCDMA) system, an evolved NodeB (evolved NodeB, eNB or eNodeB) in an LTE system, or a radio controller in a cloud radio access network (cloud radio access network, CRAN) scenario. Alternatively, the network device may be a relay station, an access point, a vehicle-mounted device, a wearable device, a network device in a 5G network, or a network device in a future evolved PLMN network, or the like. This is not limited in embodiments of this application.

The network device in embodiments of this application may be a device in a wireless network, for example, a radio access network (radio access network, RAN) node that connects the terminal device to the wireless network. Currently, some examples of the RAN node are a base station, a next generation NodeB gNB, a transmission reception point (transmission reception point, TRP), an evolved NodeB (evolved NodeB, eNB), a home base station, a baseband unit (baseband unit, BBU), an access point (access point, AP) in a Wi-Fi system, or the like. In a network structure, the network device may include a central unit (centralized unit, CU) node, a distributed unit (distributed unit, DU) node, or a RAN device including a CU node and a DU node.

The terminal device and the network device may both include an RRC signaling exchange module, a MAC signaling exchange module, and a physical layer (physical layer, PHY) signaling and data exchange module. The RRC signaling exchange module is a module that is configured by a base station and UE to send and receive RRC signaling. The MAC signaling exchange module is a module that is configured by the base station and the UE to send and receive MAC-CE signaling. The PHY signaling and data exchange module is a module configured by the base station and the UE to send and receive uplink/downlink control signaling and uplink/downlink data, and may be specifically configured to send and receive the downlink control signaling through a physical downlink control channel, send and receive the uplink control signaling through a physical uplink control channel, send and receive the downlink data through a physical downlink shared channel, and send and receive the uplink data through a physical uplink shared channel.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution entity of a method provided in embodiments of this application is not particularly limited in embodiments of this application, provided that communication can be performed according to the method provided in embodiments of this application by running a program of code recording the method provided in embodiments of this application. For example, the execution entity of the method provided in embodiments of this application may be a terminal device or a network device, or a functional module that is in a terminal device or a network device and that can invoke a program and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include, but is not limited to a magnetic storage component (for example, a hard disk drive, a floppy disk, or a magnetic tape), an optical disc (for example, a compact disc (compact disc, CD), or a digital versatile disc (digital versatile disc, DVD)), a smart card, and a flash storage component (for example, an erasable programmable read-only memory (erasable programmable read-only memory, EPROM), a card, a stick, or a key drive). In addition, various storage media described in this specification may indicate one or more devices and/or other machine-readable media that are used for storing information. The term "machine-readable medium" may include, but is not limited to, a radio channel, and various other media that can store, include, and/or carry instructions and/or data.

It should be noted that a quantity and types of terminal devices included in the network architecture shown in FIG. 1 are merely examples. Embodiments of this application are not limited thereto. For example, more or fewer terminal devices that communicate with the network device may alternatively be included. For brevity, details are not described in the accompanying drawings. In addition, in the network architecture shown in FIG. 1, although the network device and the terminal device are shown, an application scenario may not be limited to including the network device and the terminal device. For example, the application scenario may further include a core network node or a device configured to carry a virtualized network function. This is clear to a person skilled in the art, and details are not described herein.

With reference to the foregoing network architecture, a communication method provided in embodiments of this application is described below.

FIG. 2 is a schematic flowchart of a communication method according to an embodiment of this application. In this embodiment of this application, a function performed by a terminal device may alternatively be performed by a module (for example, a chip) in the terminal device, and a function performed by a network device in this application may alternatively be performed by a module (for example, a chip) in the network device.

As shown in FIG. 2, the communication method may include the following steps.

Step S201: The network device sends a first reference signal to the terminal device on a first carrier.

Correspondingly, the terminal device receives, on the first carrier, the first reference signal sent by the network device.

For example, the first reference signal may be a DMRS associated with a PDSCH, a reference signal included in a TCI state associated with the PDSCH, a DMRS associated with a PDCCH, a reference signal that is quasi-co-located with the DMRS of the PDCCH, and a reference signal included in a TCI state associated with a coreset.

Step S202: The terminal device measures signal quality of the first reference signal on the first carrier.

Optionally, the first carrier may be a carrier component supported in a current protocol, and a resource of the first carrier is configured by the network device or is predefined.

Step S203: The terminal device sends a first message to the network device on a second carrier based on the signal quality of the first reference signal, where the first message includes first indication information, and the first indication information indicates the signal quality of the first reference signal.

Correspondingly, the network device receives the first message on the second carrier.

Optionally, a frequency band of the first carrier is the same as a frequency band of the second carrier, or the frequency band of the first carrier is different from the frequency band of the second carrier.

Optionally, the first carrier may be a carrier component supported in a current protocol, and a resource of the first carrier is configured by the network device or is predefined.

In some embodiments, the terminal device may send the first message on the second carrier when the signal quality of the first reference signal satisfies a first condition. The first condition includes at least one of the following: The signal quality is lower than a first threshold, a difference between the signal quality and previously detected signal quality is higher than a second threshold, a decrease rate of the signal quality in a second time window exceeds a third threshold, or a difference between a decrease rate of the signal quality in a third time window and a previously detected decrease rate in the third time window is higher than a fourth threshold. In this application, the first condition may also be referred to as an event trigger condition, an event type, or an event trigger type. The first condition may be configured by the network device or predefined.

The first threshold, the second threshold, the third threshold, the fourth threshold, the first time window, and the second time window are configured by the network device or are predefined. The first threshold, the second threshold, the third threshold, and the fourth threshold are different from a threshold used for discovering a candidate beam, and there is no association between the first threshold, the second threshold, the third threshold, and the fourth threshold.

Optionally, the first threshold, the second threshold, the third threshold, and the fourth threshold may be obtained based on respective corresponding offset values, and the offsets may be configured by the network device.

For example, the signal quality of the first reference signal may be L1-RSRP or an L1-SINR.

For example, the signal quality of the first reference signal may be at least one of the following: signal quality of a DMRS associated with a PDSCH, signal quality of a reference signal included in a TCI state associated with the PDSCH, signal quality of a DMRS associated with a PDCCH, signal quality of a reference signal that is quasi-co-located with the DMRS of the PDCCH, and signal quality of a reference signal included in a TCI state associated with a coreset.

Optionally, the first message may further include indication information indicating the first condition. It should be noted that the terminal device may alternatively implicitly indicate the first condition to the network device by using the first message, for example, by associating different resources with the first condition.

For example, the first message is one of RRC signaling, a MAC CE, and UCI.

In some embodiments of this application, the terminal device sends the first message to the network device when measuring that the signal quality of the first reference signal satisfies the first condition, where the first message includes the first indication information, and the first indication information indicates the signal quality of the first reference signal. It should be noted that the first message may be a message including the first indication information, is not limited to only the first message sent on the second carrier, and may alternatively be a first message sent on another carrier component.

In this application, the first message may also be referred to as an event trigger request, and the first indication information may also be referred to as event content.

Step S204: The terminal device sends a second message to the network device, where the second message is used to request carrier switching.

Correspondingly, the network device receives the second message sent by the terminal device.

In some embodiments, the terminal device may send the second message to the network device when the signal quality of the first reference signal satisfies the first condition. For example, the second message is used to request to switch a carrier on which the first reference signal is sent.

In this application, the second message may also be referred to as a CC switching request.

Step S205: The network device sends second indication information to the terminal device, where the second indication information indicates to switch the second carrier to a third carrier, a frequency band of the third carrier is different from a frequency band of the second carrier, and the third carrier is used to send the first message.

Correspondingly, the terminal device receives the second indication information sent by the network device.

For example, the second indication information is an identifier of the third carrier.

Optionally, the second indication information is carried in downlink control signaling. In other words, the downlink control signaling includes the second indication information, or the downlink control signaling contains the second indication information. For example, the network device sends the downlink control signaling to the terminal device, where the downlink control signaling includes the second indication information, and the second indication information is the identifier (or referred to as an auxiliary carrier ID) of the third carrier.

For example, the second indication information indicates to switch, from the first carrier to the third carrier, a carrier component on which the first message (that is, a message including the first indication information) is sent. Alternatively, the second indication information indicates to switch, to the third carrier, a carrier on which the first message is sent. The carrier component on which the first message is sent may also be referred to as a carrier component carrying the first message, or referred to as a carrier component carrying indication information (that is, the first indication information) indicating the signal quality of the first reference signal or on which the indication information is sent.

In some embodiments, the network device sends the second indication information to the terminal device after receiving the second message.

Step S206: The network device sends a third message to the terminal device on the third carrier when receiving the first message from the terminal device N times, where the third message indicates beam switching or update, and N is a positive integer.

Correspondingly, the terminal device receives, on the third carrier, the third message sent by the network device.

In an implementation, the terminal device sends a fourth message (which may also be referred to as a feedback indication) on the second carrier before receiving the third message (which may also be referred to as an event trigger indication) on the third carrier and after receiving the second indication information, where the fourth message indicates that the second indication information is received. The terminal device performs event trigger configuration (or an event trigger configuration procedure) with the network device through the third carrier after sending the fourth message. The terminal device performs event trigger configuration with the network device through the second carrier after receiving the third message. The event trigger configuration is a process in which UE sends a message (for example, the first message) indicating the signal quality of the first reference signal, and a base station provides feedback (for example, the second message) on the message and an indication (for example, the third message) of beam switching/update, as shown in procedures of step S201, step S203, and step S206.

Optionally, the third message is sent by the network device when the network device receives the first message N times in the first time window, start time of the first time window is a moment at which the network device receives the first message for the first time or a sum of the moment at which the network device receives the first message for the first time and an offset, and the offset is predefined or is configured by the network device. Duration of the first time window is not limited in this application. For example, the duration of the first time window is a positive number.

For example, when receiving the first message for the first time, the network device may start a timer to determine the first time window and start a counter to calculate a quantity of times of receiving the first message. The network device sends the third message to the UE on the third carrier when receiving the first message N times in the first time window; and resets the timer and the counter to zero at the same time. The network device does not send the third message if a quantity of times that the first message is detected in the first time window does not reach N.

Optionally, the first message received by the network device N times may be a message indicating that the signal quality of the first reference signal satisfies the first condition, and the first message may be independent of a carrier component of the first reference signal. In other words, the first message received by the network device N times may include a first message before carrier switching and/or a first message after the carrier switching. It should be understood that carrier switching does not affect counting of the first message.

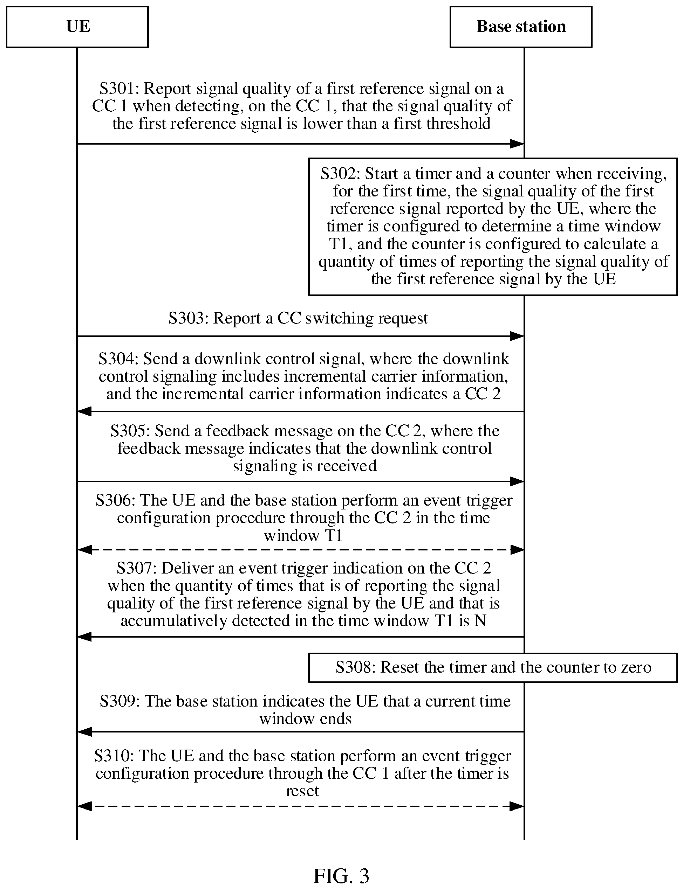

For example, the following describes the communication method in FIG. 2 by using an example in which the first carrier and the second carrier are a same carrier CC 1, the third carrier is a CC 2, the terminal device is UE, and the network device is a base station. It should be understood that for terms that are not explained in FIG. 3, refer to the related descriptions in FIG. 2. Details are not described in this embodiment of this application again.

Optionally, both the CC 1 and the CC 2 may be carrier components supported in a protocol, and resources of the CC 1 and the CC 2 are configured by a network side or are predefined.

FIG. 3 is a diagram of another communication method according to an embodiment of this application. As shown in FIG. 3, the method may include the following steps.

Step S301: UE reports signal quality of a first reference signal to a base station on a CC 1 when detecting, on the CC 1, that the signal quality of the first reference signal is lower than a first threshold.

In some embodiments, the UE reports the signal quality of the first reference signal to the base station regardless of a carrier component (for example, the CC 1 or a CC 2) on which the UE detects that the signal quality of the first reference signal satisfies a first condition.

For example, the first condition may include a plurality of event types, for example, a type 1: The signal quality of the first reference signal is lower than a threshold A (or referred to as the first threshold); a type 2: A difference between the signal quality and previously detected signal quality exceeds a threshold B (or referred to as a second threshold); a type 3: A decrease rate of the signal quality of the first reference signal in a time window T2 (or referred to as a second time window) exceeds a threshold C (or referred to as a third threshold); and a type 4: A difference between a decrease rate of the signal quality of the first reference signal in a time window T3 (or referred to as a third time window) and a previously detected decrease rate in the time window T3 exceeds a threshold D (or referred to as a fourth threshold). The thresholds are configured by the base station or are predefined. The thresholds are different from a threshold used for discovering a candidate beam, and thresholds such as A, B, C, and D are not associated with each other, and are separately configured. Further, the threshold is obtained by adding a corresponding offset to the threshold A/B/C/D. The offset may be configured by the base station. The time window T2/T3 is configured by the base station or is predefined.

Optionally, event content reported by the UE may include an event type, or different resources may correspond to event types. The reported content may be reported by using RRC, a MAC CE, or UCI.

It should be understood that the UE may alternatively report the signal quality of the first reference signal to the base station on another carrier component.

For example, the signal quality of the first reference signal reported by the UE may include signal quality detected by the UE on the CC 1/CC 2, and the signal quality may be L1-RSRP or an L1-SINR.

For example, a method for obtaining signal quality by the UE may include the following: (1) The signal quality is obtained through a PDSCH, for example, signal quality of a DMRS associated with the PDSCH is obtained. Further, if there is more than one layer of PDSCH transmission, a common measurement result of a plurality of layers needs to be considered for the signal quality. (2) The signal quality is signal quality of a reference signal included in a TCI state associated with the PDSCH. Further, the PDSCH is scheduled in particular search space (search space), such as a lowest search space ID (lowest search space ID). (3) The signal quality is obtained through a PDCCH. Further, the PDCCH is transmitted in search space specific to the UE, that is, UE-specific search space (UE-specific search space). (4) The reference signal may be signal quality of a DMRS associated with the PDCCH. (5) The reference signal may be a reference signal that is quasi-co-located with the DMRS of the PDCCH. (6) The reference signal may be signal quality of a reference signal included in a TCI state associated with a control resource set. Further, the signal quality is signal quality of a reference signal included in a TCI state associated with only a part of the control resource set, for example, a lowest control resource set identifier (lowest CORESET ID).

Step S302: The base station starts a timer and a counter when receiving, for the first time, the signal quality of the first reference signal reported by the UE, where the timer is configured to determine a time window T1, and the counter is configured to calculate a quantity of times of reporting the signal quality of the first reference signal by the UE.

Step S303: The UE reports a CC switching request to the base station.

In an implementation, the UE reports the CC switching request to the base station when detecting that the signal quality of the first reference signal satisfies the first condition.

Step S304: The base station sends downlink control signaling to the UE, where the downlink control signaling includes incremental carrier information, and the incremental carrier information indicates the CC 2.

In an implementation, the base station sends the downlink control signaling to the UE after receiving the CC switching request. It may be understood that the downlink control signaling is used to require the UE to change the CC 1 to the CC 2, and the CC 1 is different from the CC 2.

For example, the CC 1 on which event reporting is performed by the UE is in an FR 2 frequency band. When the UE detects that the signal quality of the first reference signal on the CC 1 sharply decreases, and possibly the event reporting cannot be completed on the CC 1, the UE needs to initiate the CC switching request through this procedure. After the base station performs determining and confirmation, the CC 2 in an FR 1 frequency band may be switched to. In the method, a coverage area can be enhanced.

For example, frequency ranges of an FR 1 and an FR 2 may be defined as shown in Table 1:

**Table 1**

| Name of a frequency range | Corresponding frequency range |
|---|---|
| FR 1 | 410 MHz to 7125 MHz |
| FR 2 | 24250 MHz to 52600 MHz |

Step S305: The UE sends a feedback message on the CC 2, where the feedback message indicates that the downlink control signaling is received.

In an implementation, the UE sends the feedback message (that is, the foregoing fourth message) to the base station after receiving the downlink control signaling.

Step S306: The UE and the base station perform an event trigger configuration procedure through the CC 2 in the time window T1.

In an implementation, after the UE sends the feedback message to the base station, in the time window T1, the UE continuously performs event reporting through the CC 2, that is, reports the signal quality of the first reference signal to the base station when detecting that the signal quality of the first reference signal satisfies the first condition.

Step S307: The base station delivers an event trigger indication to the UE on the CC 2 when the quantity of times that is of reporting the signal quality of the first reference signal by the UE and that is accumulatively detected in the time window T1 is N.

Optionally, if the quantity of times accumulatively detected in the time window T1 is less than N, the event trigger indication is not delivered.

For example, a value of N may be determined by the base station, and N is a natural number greater than 0. N may be an accumulative count of a single event type, or may be an accumulative count of a combination of a plurality of types of events. For example, when reporting the signal quality of the first reference signal, the terminal device further reports an event type of the first condition. If the network device performs, for a specific event type (for example, the type 1), accumulative counting on the quantity of times of reporting the signal quality of the first reference signal by the UE, when the network device receives the type 1 and the signal quality of the first reference signal, the network device increments the accumulative count by 1, and when the network device receives another type (for example, the type 2) and the signal quality of the first reference signal, the network device does not increment the accumulative count. The type 1 and the signal quality of the first reference signal may be reported by using a same message (for example, the first message). The first message includes indication information (or referred to as an indication indicating the first condition) indicating the type 1 and the first indication information. The first indication information indicates the signal quality of the first reference signal.

Step S308: The base station resets the timer and the counter to zero.

In an implementation, when the quantity of times that is of reporting the signal quality of the first reference signal by the UE and that is accumulatively detected in the T1 is N, the base station resets the timer and the counter to zero.

For example, a counter for counting up to N may be in an inactive state by default. The counter is activated and starts timing upon first reception of event reporting of the UE. The counter is deactivated when counting ends in the time window T1, and if a count value of the counter is less than N at this time, the counter is reset to zero.

Step S309: The base station indicates the UE that a current time window ends.

In an implementation, the base station may send indication information to the UE after resetting the timer and the counter to zero or at the same time when the base station resets the timer and the counter to zero. The indication information indicates that the current time window (that is, the time window T1) ends. Correspondingly, after receiving the indication information, the UE may perform step S310.

Step S310: The UE and the base station perform an event trigger configuration procedure through the CC 1 after the timer is reset.

In this embodiment of this application, after the timer is reset, the UE and the base station may return to initial states for next event trigger configuration. For example, next time when the terminal device detects that the signal quality of the first reference signal is lower than the first threshold, the terminal device reports the signal quality of the first reference signal on the CC 1.

The event trigger configuration procedure is a process in which the UE sends an event trigger request (that is, the UE sends the signal quality of the first reference signal) and the base station provides feedback (for example, the downlink control signaling) on the request. The timer is a timer of the base station. The UE performs reporting when detecting that the signal quality satisfies the first condition. The base station detects the quantity of times of reporting in the time window T.

The foregoing describes in detail the method provided in this application. For ease of implementing the foregoing solutions in embodiments of this application, embodiments of this application further provide a corresponding apparatus or device.

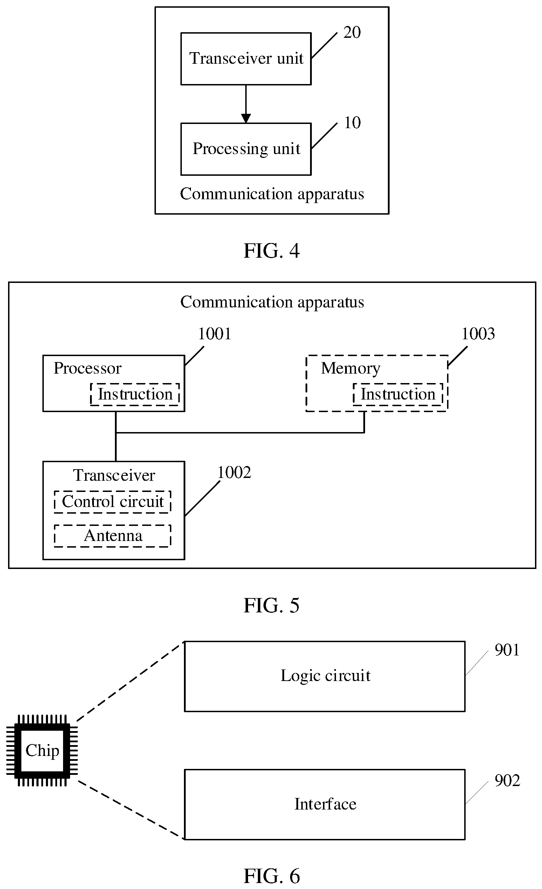

In this application, a network device and a terminal device are divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software function module. It should be noted that, in this application, the division into modules is an example, and is merely a logical function division. In an actual implementation, another division manner may be used. The communication apparatus in embodiments of this application is described below in detail with reference to FIG. 4 to FIG. 6.

FIG. 4 is a diagram of a structure of a communication apparatus according to an embodiment of this application. As shown in FIG. 4, the communication apparatus may include a processing unit 10 and a transceiver unit 20.

In some embodiments of this application, the communication apparatus may be the terminal device shown above, or a chip or a circuit disposed in the terminal device. In other words, the communication apparatus may be configured to perform steps, functions, or the like performed by the terminal device in the foregoing method embodiments.

In a design, the processing unit 10 is configured to measure signal quality of a first reference signal on a first carrier.

The transceiver unit 20 is configured to send a first message on a second carrier based on the signal quality of the first reference signal, where the first message includes first indication information, and the first indication information indicates the signal quality of the first reference signal; send a second message, where the second message is used to request carrier switching; receive second indication information, where the second indication information indicates to switch the second carrier to a third carrier, a frequency band of the third carrier is different from a frequency band of the second carrier, and the third carrier is used to send the first message; and receive a third message on the third carrier, where the third message indicates beam switching or update, the third message is sent by a network device when the network device receives the first message N times, and N is a positive integer.

In a possible implementation, a frequency band of the first carrier is the same as the frequency band of the second carrier, or the frequency band of the first carrier is different from the frequency band of the second carrier.

In a possible implementation, the third message is sent by the network device when the network device receives the first message N times in a first time window, start time of the first time window is a moment at which the network device receives the first message for the first time or a sum of the moment at which the network device receives the first message for the first time and an offset, and the offset is predefined or is configured by the network device.

In a possible implementation, the transceiver unit 20 is configured to send a fourth message on the second carrier before receiving the third message on the third carrier, where the fourth message indicates that the second indication information is received.

The processing unit 10 is configured to perform event trigger configuration with the network device through the third carrier after sending the fourth message; and perform event trigger configuration with the network device through the second carrier after receiving the third message.

Optionally, the signal quality of the first reference signal satisfies a first condition.

The first condition includes at least one of the following: The signal quality is lower than a first threshold, a difference between the signal quality and previously detected signal quality is higher than a second threshold, a decrease rate of the signal quality in a second time window exceeds a third threshold, or a difference between a decrease rate of the signal quality in a third time window and a previously detected decrease rate in the third time window is higher than a fourth threshold.

Optionally, the first threshold, the second threshold, the third threshold, the fourth threshold, the first time window, and the second time window are configured by the network device or are predefined; and
the first threshold, the second threshold, the third threshold, and the fourth threshold are different from a threshold used for discovering a candidate beam, and there is no association between the first threshold, the second threshold, the third threshold, and the fourth threshold.

Optionally, the first message further includes indication information indicating the first condition.

Optionally, the signal quality is L1-RSRP or an L1-SINR.

Optionally, the signal quality is at least one of the following:
signal quality of a DMRS associated with a PDSCH, signal quality of a reference signal included in a TCI state associated with the PDSCH, signal quality of a DMRS associated with a PDCCH, signal quality of a reference signal that is quasi-co-located with the DMRS of the PDCCH, and signal quality of a reference signal included in a TCI state associated with a coreset.

Optionally, the first message is one of RRC signaling, a MAC CE, and UCI.

Optionally, the second indication information is an identifier of the third carrier, and the second indication information is carried in downlink control signaling.

In this embodiment of this application, for descriptions about the first carrier, the first reference signal, and the like, refer to the descriptions in the method embodiments shown in FIG. 2 and FIG. 3. Details are not described herein again.

It may be understood that the specific descriptions of the processing unit 10 and the transceiver unit 20 shown in this embodiment of this application are merely examples. For specific functions or steps performed by the processing unit 10 and the transceiver unit 20, refer to the method embodiments shown in FIG. 2 and FIG. 3. Details are not described herein again. In addition, for technical effects of this embodiment of this application, refer to the technical effects of the method embodiments shown in FIG. 2 and FIG. 3. For brevity, details are not described herein again.

Still refer to FIG. 4. In some other embodiments of this application, the communication apparatus may be the terminal device shown above, or a chip or a circuit disposed in the terminal device. In other words, the communication apparatus may be configured to perform steps, functions, or the like performed by the terminal device in the foregoing method embodiments.

In a design, the transceiver unit 20 is configured to send a first reference signal on a first carrier; receive a first message on a second carrier, where the first message includes first indication information, the first indication information indicates signal quality of the first reference signal, and the first message is sent by a terminal device based on the signal quality of the first reference signal; receive a second message, where the second message is used to request carrier switching; send second indication information, where the second indication information indicates to switch the second carrier to a third carrier, a frequency band of the third carrier is different from a frequency band of the second carrier, and the third carrier is used to send the first message; and send a third message on the third carrier when receiving the first message N times, where the third message indicates beam switching or update, and N is a positive integer.

In a possible implementation, the processing unit 10 is configured to determine the third carrier.

In a possible implementation, a frequency band of the first carrier is the same as the frequency band of the second carrier, or the frequency band of the first carrier is different from the frequency band of the second carrier.

In a possible implementation, the third message is sent by the network device when the network device receives the first message N times in a first time window, start time of the first time window is a moment at which the network device receives the first message for the first time or a sum of the moment at which the network device receives the first message for the first time and an offset, and the offset is predefined or is configured by the network device.

In a possible implementation, the transceiver unit 20 is configured to receive a fourth message on the second carrier, where the fourth message indicates that the second indication information is received.

The processing unit 10 is configured to perform event trigger configuration with the terminal device through the third carrier after receiving the fourth message; and perform event trigger configuration with the terminal device through the second carrier after sending the third message.

Optionally, the signal quality of the first reference signal satisfies a first condition.

The first condition includes at least one of the following: The signal quality is lower than a first threshold, a difference between the signal quality and previously detected signal quality is higher than a second threshold, a decrease rate of the signal quality in a second time window exceeds a third threshold, or a difference between a decrease rate of the signal quality in a third time window and a previously detected decrease rate in the third time window is higher than a fourth threshold.

With reference to the second aspect, in a possible implementation, the first threshold, the second threshold, the third threshold, the fourth threshold, the first time window, and the second time window are configured by the network device or are predefined. The first threshold, the second threshold, the third threshold, and the fourth threshold are different from a threshold used for discovering a candidate beam, and there is no association between the first threshold, the second threshold, the third threshold, and the fourth threshold.

Optionally, the first message further includes indication information indicating the first condition.

Optionally, the signal quality is L1-RSRP or an L1-SINR.

Optionally, the signal quality is at least one of the following:
signal quality of a DMRS associated with a PDSCH, signal quality of a reference signal included in a TCI state associated with the PDSCH, signal quality of a DMRS associated with a PDCCH, signal quality of a reference signal that is quasi-co-located with the DMRS of the PDCCH, and signal quality of a reference signal included in a TCI state associated with a coreset.

Optionally, the first message is one of RRC signaling, a MAC CE, and UCI.

Optionally, the second indication information is an identifier of the third carrier, and the second indication information is carried in downlink control signaling.

In this embodiment of this application, for descriptions about the first carrier, the first reference signal, and the like, refer to the descriptions in the method embodiments shown in FIG. 2 and FIG. 3. Details are not described herein again.

It may be understood that the specific descriptions of the processing unit 10 and the transceiver unit 20 shown in this embodiment of this application are merely examples. For specific functions or steps performed by the processing unit 10 and the transceiver unit 20, refer to the method embodiments shown in FIG. 2 and FIG. 3. Details are not described herein again. In addition, for technical effects of this embodiment of this application, refer to the technical effects of the method embodiments shown in FIG. 2 and FIG. 3. For brevity, details are not described herein again.

The foregoing describes the network device and the terminal device in embodiments of this application. The following describes possible product forms of the network device and the terminal device. It should be understood that any product in any form that has a function of the network device or the terminal device in FIG. 4 falls within the protection scope of embodiments of this application. It should be further understood that the following descriptions are merely examples, and are not intended to limit the product form of the communication apparatus in embodiments of this application.

In a possible implementation, the communication apparatus shown in FIG. 4 may further include a processing unit. The processing unit may be one or more processors. The transceiver unit 20 and the processing unit 10 are integrated into one component, for example, a transceiver, or the transceiver unit 20 may be a sender, and the processing unit 10 may be a receiver. In embodiments of this application, the processor and the transceiver may be coupled, or the like. A manner of a connection between the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed before the information is input into the processor.

FIG. 5 is a diagram of another structure of a communication apparatus according to an embodiment of this application. As shown in FIG. 5, the communication apparatus provided in this embodiment of this application may be configured to implement the method described in the foregoing method embodiments. For reference, refer to the descriptions in the foregoing method embodiments. The communication apparatus may be a network device, a terminal device, or a chip therein. For example, the communication apparatus includes one or more processors 1001 and a transceiver 1002. The communication apparatus may further include a memory 1003. In an implementation, the communication apparatus further includes an input/output apparatus (not shown in FIG. 5).

The processor 1001 is mainly configured to process a communication protocol and communication data, control the entire communication apparatus, execute a software program, and process data of the software program. The memory 1003 is mainly configured to store a software program and data. The transceiver 1002 may include a control circuit and an antenna. The control circuit is mainly configured to perform conversion between a baseband signal and a radio frequency signal and process the radio frequency signal. The antenna is mainly configured to send and receive radio frequency signals in a form of an electromagnetic wave. The input/output apparatus, like a touchscreen, a display, or a keyboard, is mainly configured to receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on to-be-sent data, and then outputs a baseband signal to the radio frequency circuit. The radio frequency circuit performs radio frequency processing on the baseband signal, and then sends a radio frequency signal in an electromagnetic wave form through the antenna. When data is sent to the communication apparatus, the radio frequency circuit receives the radio frequency signal through the antenna, converts the radio frequency signal into a baseband signal, and outputs the baseband signal to the processor 1001. The processor 1001 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

For example, when the communication apparatus is configured to perform the steps, the method, or the functions performed by the terminal device in the embodiment shown in FIG. 2, the processor 1001 may be configured to perform step S202 in FIG. 2, and the transceiver 1002 may be configured to perform step S203 and step S204 in FIG. 2, and/or to perform another process of the technology described in this specification.

For example, when the communication apparatus is configured to perform the steps, the method, or the functions performed by the network device in the embodiment shown in FIG. 2, the transceiver 1002 may be configured to perform step S201, step S205, and step S206 in FIG. 2, and/or to perform another process of the technology described in this specification.

In any one of the foregoing implementations, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured for transmission or transfer of a signal.

In any one of the foregoing implementations, the processor 1001 may store instructions, the instructions may be a computer program, and the computer program is run on the processor 1001, to cause the communication apparatus to perform the method described in the foregoing method embodiments. The computer program may be fixed in the processor 1001. In this case, the processor 1001 may be implemented by hardware.

In an implementation, the communication apparatus may include a circuit, and the circuit may implement sending, receiving, or communication functions in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an n-type Metal-oxide-semiconductor (nMetal-oxide-semiconductor, NMOS), a positive channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may further include more components and the like than those in FIG. 5. This is not limited in embodiments of this application. The methods performed by the processor and the transceiver shown above are merely examples. For steps specifically performed by the processor and the transceiver, refer to the descriptions of the foregoing method embodiments.

In another possible implementation, in the communication apparatus shown in FIG. 4, the processing unit 10 may be one or more logic circuits, and the transceiver unit 20 may be an input/output interface, or referred to as a communication interface, an interface circuit, an interface, or the like. Alternatively, the transceiver unit 20 may be a sending unit and a receiving unit. The sending unit may be an output interface, and the receiving unit may be an input interface. The sending unit and the receiving unit are integrated into one unit, for example, an input/output interface.

FIG. 6 is a diagram of another structure of a communication apparatus according to an embodiment of this application. As shown in FIG. 6, the communication apparatus shown in FIG. 6 includes a logic circuit 901 and an interface 902. In other words, the foregoing processing unit may be implemented by using the logic circuit 901, and the transceiver unit 20 and the processing unit 10 may be implemented by using the interface 902. The logic circuit 901 may be a chip, a processing circuit, an integrated circuit, a system-on-chip (system on chip, SoC), or the like. The interface 902 may be a communication interface, an input/output interface, a pin, or the like. For example, FIG. 6 shows an example in which the communication apparatus is a chip. The chip includes the logic circuit 901 and the interface 902.

In this embodiment of this application, the logic circuit and the interface may be coupled to each other. A specific manner of connection between the logic circuit and the interface is not limited in this embodiment of this application.

For example, when the communication apparatus is configured to perform the steps, the method, or the functions performed by the terminal device in the method embodiment shown in FIG. 2, the logic circuit 901 is configured to measure signal quality of a first reference signal on a first carrier; and the interface 902 is configured to send a first message and the like.

For example, when the communication apparatus is configured to perform the steps, the method, or the functions performed by the network device in the method embodiment shown in FIG. 2, the logic circuit 901 is configured to determine the first reference signal; and the interface 902 is configured to send the first reference signal and the like.

In this embodiment of this application, for descriptions about first indication information, second indication information, and the like, refer to the descriptions in the method embodiment shown in FIG. 2. Details are not described herein again. It may be understood that for specific descriptions of the logic circuit 901 and the interface 902, refer to the descriptions of the processing unit, the transceiver unit, and the processing unit shown in FIG. 5. Details are not described herein again.

It may be understood that the communication apparatus described in this embodiment of this application may implement the method provided in embodiments of this application in a form of hardware, or may implement the method provided in embodiments of this application in a form of software. This is not limited in embodiments of this application.

For specific implementations of the embodiment shown in FIG. 6, further refer to the foregoing embodiments. Details are not described herein again.

An embodiment of this application further provides a communication system. The communication system includes a network device and a terminal device. The network device and the terminal device may be configured to perform the method in any one of the foregoing method embodiments (in FIG. 2 and FIG. 3).

In addition, this application further provides a computer program. The computer program is for implementing an operation and/or processing performed by the network device in the method provided in this application.

This application further provides a computer program. The computer program is for implementing an operation and/or processing performed by the terminal device in the method provided in this application.

This application further provides a computer-readable storage medium. The computer-readable storage medium stores computer code. When the computer code is run on a computer, the computer is caused to perform an operation and/or processing performed by the network device in the method provided in this application.

This application further provides a computer-readable storage medium. The computer-readable storage medium stores computer code. When the computer code is run on a computer, the computer is caused to perform an operation and/or processing performed by the terminal device in the method provided in this application.

This application further provides a computer program product. The computer program product includes computer code or a computer program. When the computer code or the computer program is run on a computer, an operation and/or processing performed by the network device in the method provided in this application are/is performed.

This application further provides a computer program product. The computer program product includes computer code or a computer program. When the computer code or the computer program is run on a computer, an operation and/or processing performed by the terminal device in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and the parts displayed as units may or may not be physical units, may be located in one place, or may be distributed over a plurality of network units. Some or all of the units may be selected based on an actual requirement to implement technical effects of the solutions provided in embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the method described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
measuring signal quality of a first reference signal on a first carrier;
sending a first message on a second carrier based on the signal quality of the first reference signal, wherein the first message comprises first indication information, and the first indication information indicates the signal quality of the first reference signal;
sending a second message, wherein the second message is used to request carrier switching;
receiving second indication information, wherein the second indication information indicates to switch the second carrier to a third carrier, a frequency band of the third carrier is different from a frequency band of the second carrier, and the third carrier is used to send the first message; and
receiving a third message on the third carrier, wherein the third message indicates beam switching or update, the third message is sent by a network device when the network device receives the first message N times, and N is a positive integer.

2. The method according to claim 1, wherein a frequency band of the first carrier is the same as the frequency band of the second carrier, or the frequency band of the first carrier is different from the frequency band of the second carrier.

3. The method according to claim 1 or 2, wherein the third message is sent by the network device when the network device receives the first message N times in a first time window, start time of the first time window is a moment at which the network device receives the first message for the first time or a sum of the moment at which the network device receives the first message for the first time and an offset, and the offset is predefined or is configured by the network device.

4. The method according to claim 1 or 2, wherein the method further comprises:
sending a fourth message on the second carrier before receiving the third message on the third carrier, wherein the fourth message indicates that the second indication information is received;
performing event trigger configuration with the network device through the third carrier after sending the fourth message; and
performing event trigger configuration with the network device through the second carrier after receiving the third message.

5. The method according to claim 3, wherein the signal quality of the first reference signal satisfies a first condition; and
the first condition comprises at least one of the following: the signal quality is lower than a first threshold, a difference between the signal quality and previously detected signal quality is higher than a second threshold, a decrease rate of the signal quality in a second time window exceeds a third threshold, or a difference between a decrease rate of the signal quality in a third time window and a previously detected decrease rate in the third time window is higher than a fourth threshold.

6. The method according to claim 5, wherein the first threshold, the second threshold, the third threshold, the fourth threshold, the first time window, and the second time window are configured by the network device or are predefined; and
the first threshold, the second threshold, the third threshold, and the fourth threshold are different from a threshold used for discovering a candidate beam, and there is no association between the first threshold, the second threshold, the third threshold, and the fourth threshold.

7. The method according to claim 5, wherein the first message further comprises indication information indicating the first condition.

8. The method according to claim 1 or 2, wherein the signal quality is layer 1-reference signal received power L1-RSRP or a layer 1-signal-to-interference-plus-noise ratio L1-SINR.

9. The method according to claim 7, wherein the signal quality is at least one of the following:
signal quality of a demodulation reference signal DMRS associated with a physical downlink shared channel PDSCH, signal quality of a reference signal comprised in a transmission configuration indicator TCI state associated with the PDSCH, signal quality of the DMRS associated with a physical downlink control channel PDCCH, signal quality of a reference signal that is quasi-co-located with the DMRS of the PDCCH, and signal quality of a reference signal comprised in the TCI state associated with a control resource set.

10. The method according to claim 1 or 2, wherein the first message is one of radio resource control RRC signaling, a medium access control control element MAC CE, and uplink control information UCI.

11. The method according to claim 1 or 2, wherein the second indication information is an identifier of the third carrier, and the second indication information is carried in downlink control signaling.

12. A communication method, comprising:
sending a first reference signal on a first carrier;
receiving a first message on a second carrier, wherein the first message comprises first indication information, the first indication information indicates signal quality of the first reference signal, and the first message is sent by a terminal device based on the signal quality of the first reference signal;
receiving a second message, wherein the second message is used to request carrier switching;
sending second indication information, wherein the second indication information indicates to switch the second carrier to a third carrier, a frequency band of the third carrier is different from a frequency band of the second carrier, and the third carrier is used to send the first message; and
sending a third message on the third carrier when receiving the first message N times, wherein the third message indicates beam switching or update, and N is a positive integer.

13. The method according to claim 12, wherein a frequency band of the first carrier is the same as the frequency band of the second carrier, or the frequency band of the first carrier is different from the frequency band of the second carrier.

14. The method according to claim 12 or 13, wherein the third message is sent by the network device when the network device receives the first message N times in a first time window, start time of the first time window is a moment at which the network device receives the first message for the first time or a sum of the moment at which the network device receives the first message for the first time and an offset, and the offset is predefined or is configured by the network device.

15. The method according to claim 12 or 13, wherein the method further comprises:
receiving a fourth message on the second carrier, wherein the fourth message indicates that the second indication information is received;
performing event trigger configuration with the terminal device through the third carrier after receiving the fourth message; and
performing event trigger configuration with the terminal device through the second carrier after sending the third message.

16. The method according to claim 14, wherein the signal quality of the first reference signal satisfies a first condition; and
the first condition comprises at least one of the following: the signal quality is lower than a first threshold, a difference between the signal quality and previously detected signal quality is higher than a second threshold, a decrease rate of the signal quality in a second time window exceeds a third threshold, or a difference between a decrease rate of the signal quality in a third time window and a previously detected decrease rate in the third time window is higher than a fourth threshold.

17. The method according to claim 16, wherein the first threshold, the second threshold, the third threshold, the fourth threshold, the first time window, and the second time window are configured by the network device or are predefined; and
the first threshold, the second threshold, the third threshold, and the fourth threshold are different from a threshold used for discovering a candidate beam, and there is no association between the first threshold, the second threshold, the third threshold, and the fourth threshold.

18. The method according to claim 16, wherein the first message further comprises indication information indicating the first condition.

19. The method according to claim 12 or 13, wherein the signal quality is layer 1-reference signal received power L1-RSRP or a layer 1-signal-to-interference-plus-noise ratio L1-SINR.

20. The method according to claim 19, wherein the signal quality is at least one of the following:
signal quality of a demodulation reference signal DMRS associated with a physical downlink shared channel PDSCH, signal quality of a reference signal comprised in a transmission configuration indicator TCI state associated with the PDSCH, signal quality of the DMRS associated with a physical downlink control channel PDCCH, signal quality of a reference signal that is quasi-co-located with the DMRS of the PDCCH, and signal quality of a reference signal comprised in the TCI state associated with a control resource set.

21. The method according to claim 12 or 13, wherein the first message is one of radio resource control RRC signaling, a medium access control control element MAC CE, and uplink control information UCI.

22. The method according to claim 12 or 13, wherein the second indication information is an identifier of the third carrier, and the second indication information is carried in downlink control signaling.

23. A communication apparatus, comprising a module or a unit configured to perform the method according to any one of claims 1 to 22.

24. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 22 by using a logic circuit or by executing code instructions.

25. A communication system, comprising: a terminal device configured to perform the method according to any one of claims 1 to 11, and a network device configured to perform the method according to any one of claims 12 to 22.
